# EUROPÄISCHE PATENTSCHRIFT

(11) **EP 0 805 831 B1**
(45) Veröffentlichungstag und Bekanntmachung des Hinweises auf die Patenterteilung: **26.04.2000**
(21) Anmeldenummer: 96900954.7
(22) Anmeldetag: 15.01.1996
(51) Int. Cl.: C08G 18/48, C08G 18/50, C08J 9/14

(54) **Verwendung von Toluylendiamin gestarteten Propylenoxid Polyolen in Polyurethan Hartschaumstoffen**
Use of toluenediamine initiated propyleneoxide polyols in rigid polyurethane foams
Utilisation de polyols en base de toluenediamine oxide de propylene dans mousses de polyurethane rigides

(30) Priorität: 27.01.1995 DE 19502578
(43) Veröffentlichungstag der Anmeldung: 12.11.1997
(73) Patentinhaber: BAYER AG, 51368 Leverkusen (DE)
(72) Erfinder: DIETRICH, Karl-Werner, D-51519 Odenthal (DE); DIETRICH, Manfred, D-51373 Leverkusen (DE); LAMBERTS, Wilhelm, 04639-030 S o Paulo, SP (BR); KLÄN, Walter, D-51373 Leverkusen (DE)
(86) Internationale Anmeldenummer: EP9600140
(87) Internationale Veröffentlichungsnummer: WO9623017

(56) Entgegenhaltungen:
- EP-A- 0 293 060
- EP-A- 0 374 628
- EP-A- 0 495 134
- US-A- 5 260 347

## Beschreibung

Es ist bekannt, PUR-Hartschaumstoffe unter Verwendung von leichtflüchtigen Alkanen und Hydro-Fluor-Alkanen als Treibmittel herzustellen. Hierbei ist man üblicherweise in der Auswahl der Polyole durch die geringe Löslichkeit genannter Treibmittel in den meisten handelsüblichen Polyolen sowie Polyolmischungen eingeschränkt. Zwar gibt es einige Polyoltypen mit guter Löslichkeit; hier sind insbesondere zu nennen Trimethylolpropan- sowie Ethylendiamin-gestartete Polyether. Bei Trimethylolpropanethern wirkt sich die niedrige Funktionalität nachteilig auf die Formverweilzeit (Aushärtung der erhaltenen Schaumstoffe) aus, während man bei höheren Konzentrationen an Ethylendiamin-gestarteten Polyethern eine zu hohe Eigenaktivität der Schaumstofformulierung erhält.

Es wurde nun gefunden, daß auf o-Toluylendiamin gestartete Propylenoxid-Polyether einerseits Schaumstoffe mit zufriedenstellender Aushärtung ergeben und andererseits auch eine ausreichend niedrige Eigenaktivität besitzen, so daß sie in ausreichender Konzentration der Formulierung zugesetzt werden können, wie sie für die Löslichkeit von Alkanen und Hydro-Fluor-Alkanen notwendig ist.

Es hat sich auch gezeigt, daß die o-Toluylendiamin-gestarteten Polyether sich durch eine relativ niedrige Viskosität auszeichnen. Bei den Arbeiten an diesen Polyethern wurde weiterhin festgestellt, daß man relativ niedrig-viskose Polyole erhalten kann, wenn man das Toluylendiamin zunächst mit 3 Mol Propylenoxid umsetzt und anschließend nach Zugabe eines alkalischen Katalysators sowie weiteren Mengen an Propylenoxid die gewünschte OH-Zahl einstellt.

Man erhält so Polyole, welche harmonisch abgestimmt sind in Löslichkeit gegenüber den erfindungsgemäß zu verwendenden Treibmitteln, Viskosität, Eigenaktivität, Einfluß auf das Fließverhalten der harten Schaumstoffe bzw. einer kurzen Formverweilzeit.

Gegenstand der Erfindung ist die Verwendung von tert. Aminogruppen aufweisende Polyetherpolyole einer OH-Zahl von 300 bis 500, vorzugsweise 350 bis 420, erhältlich durch Anlagerung von ausschließlich Propylenoxid an o-Toluylendiamin, zur Herstellung von harten Polyurethan-Schaumstoffen in geschlossenen Formen.

Die Herstellung von derartigen Polyetherpolyolen ist dadurch gekennzeichnet, daß o-Toluylendiamin zunächst mit 3 Mol Propylenoxid und anschließend nach Zugabe eines Alkali-Katalysators mit weiteren Mengen an Propylenoxid umgesetzt wird, bis eine OH-Zahl von 300 bis 500, vorzugsweise 350 bis 420, erreicht worden ist.

Eine Polyolformulierung für Polyurethan-Hartschaumstoffe, enthält 40 bis 80 Gew.-% der obengenannten tert. Aminogruppen aufweisenden Polyetherpolyole.

Bevorzugt ist
- eine oben genannte Polyolformulierung, enthaltend zusätzlich Sucrosepolyetherpolyole einer OH-Zahl von 350 bis 500 bzw. enthaltend zusätzlich eine Mischung aus Sucrosepolyetherpolyolen einer OH-Zahl von 350 bis 500 und Phthalsäureesterpolyolen,
- die obengenannte Polyolformulierung, enthaltend Cyclopentan als Treibmittel,
- die obengenannte Polyolformulierung, enthaltend n- und/oder i-Pentan als Treibmittel und
- die obengenannte Polyolformulierung, enthaltend Hydrofluoralkane wie 1,1,1,4,4,4-Hexafluorbutan und/oder 1,1,1,3,3-Pentafluorpropan als Treibmittel.

Die Erfindung betrifft die Verwendung der obengenannten Polyolformulierungen zur Herstellung von harten Polyurethan-Schaumstoffen durch Umsetzung mit organischen Polyisocyanaten, gegebenenfalls weiteren Verbindungen mit mindestens zwei gegenüber Isocyanaten reaktiven Wasserstoffatomen, an sich bekannten organischen Treibmitteln, gegebenenfalls in Gegenwart von Wasser sowie üblichen Hilfs- und Zusatzstoffen.

Für die Herstellung von harten Polyurethanschaumstoffen werden erfindungsgemäß verwendet:
1. die obengenannten tert. Aminogruppen aufweisenden Polyetherpolyole einer OH-Zahl von 300 bis 500, vorzugsweise 350 bis 420, erhältlich durch Anlagerung von ausschließlich Propylenoxid an o-Toluylendiamin. Ihre Herstellung erfolgt z.B. so, daß o-Toluylendiamin zunächst mit 3 Mol Propylenoxid und anschließend nach Zugabe eines Alkali-Katalysators mit weiteren Mengen an Propylenoxid umgesetzt wird, bis eine OH-Zahl von 300 bis 500, vorzugsweise 350 bis 420, erreicht worden ist. Für die Herstellung von harten Polyurethanschaumstoffen werden sie in der Regel als Polyolformulierung, in der sie in der Regel zu 40 bis 80 Gew.-% enthalten sind, eingesetzt.
   Die Polyolformulierungen enthalten oft zusätzlich Sucrosepolyetherpolyole einer OH-Zahl von 350 bis 500 und/oder Phthalsäureesterpolyole.
   Die Polyolformulierungen enthalten ferner Cyclopentan und/oder n- und/oder i-Pentan und/oder Hydrofluoralkane wie 1,1,1,4,4,4-Hexafluorbutan und/oder 1,1,1,3,3-Pentafluorpropan als Treibmittel. Anteilmäßig (bis zu 40 Gew.-%) können in der Polyolformulierung auch andere Verbindungen mit mindestens zwei gegenüber Isocyanaten reaktiven Wasserstoffatomen und einem Molekulargewicht von 62 bis 10.000, vorzugsweise Polyole wie die an sich bekannten Polyether und Polyester, sowie Kettenverlängerungs- und Vernetzungsmittel (vergl. DE-OS 2 832 253, Seiten 11 bis 20) mitverwendet werden.
   Ausgangskomponenten für die Herstellung der harten Polyurethanschaumstoffe sind ferner
2. Aliphatische, cycloaliphatische, araliphatische, aromatische und heterocyclische Polyisocyanate, wie sie z.B. von W. Siefken in Justus Liebigs Annalen der Chemie, 562 Seiten 75 bis 136, beschrieben werden, beispielsweise solche der Formel,

   Q(NCO)ₙ,

   in der
   - n: 2 bis 4, vorzugsweise 2 bis 3, und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,

   z.B. solche Polyisocyanate, wie sie in der DE-OS 2 832 253, Seiten 10 bis 11, beschrieben werden.
   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.
3. Als Treibmittel werden n- und/oder i-Pentan und/oder Cyclopentan und/oder Hydrofluoralkane wie 1,1,1,4,4,4-Hexafluorbutan und/oder 1,1,1,3,3-Pentafluorpropan verwendet.
   Als zusätzliche Treibmittel können Wasser und/oder andere leicht flüchtige organische Verbindungen mitverwendet werden.
4. Gegebenenfalls mitverwendet werden weitere an sich bekannte Hilfs- und Zusatzstoffe, wie Katalysatoren, Emulgatoren, Flammschutzmittel und Schaumstabilisatoren.
   Als Emulgatoren sind solche auf Basis alkoxilierter Fettsäuren und höherer Alkohole bevorzugt. Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Die aus der Polyurethanchemie an sich bekannten Katalysatoren wie tert.-Amine und/oder metallorganische Verbindungen können mitverwendet werden.
   Als Flammschutzmittel sei beispielsweise Trikresylphosphat genannt.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.
   Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B solche, die in der US-PS 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Erfindungsgemäß wird in der Regel im Kennzahlbereich von 100 bis 300, vorzugsweise 100 bis 130 gearbeitet.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekanntgeworden sind.

Vorzugsweise werden erfindungsgemäß Kühl- und Kältegeräte ausgeschäumt.

Selbstverständlich können aber auch Schaumstoffe durch Blockverschäumung oder nach dem an sich bekannten Doppeltransportbandverfahren hergestellt werden.

Des weiteren finden die nach der Erfindung erhältlichen Hartschaumstoffe z.B. im Bauwesen sowie für die Dämmung von Fernwärmerohren und Containern Anwendung.

### Ausführungsbeispiele

### I. Herstellung von o-Toluylendiamin (TDA)/Propylenoxid-polyethern

### Beispiel A

In einem für Umsetzungen mit Alkylenoxiden geeigneten 100 l Reaktor werden 19,6 kg o-TDA, das als Nebenprodukt bei der Herstellung von TDA anfallende Gemisch aus 2,3- und 3,4-TDA, vorgelegt und nach gründlichem Spülen mit Stickstoff bei 110 bis 125°C und 2 bis 3 bar Stickstoff innerhalb von 2 Stunden 27,9 kg Propylenoxid (3 Mol/Mol TDA) zudosiert. Nach 2 Stunden Nachreaktion und Zugabe von 600 g 45 %iger wäßriger Kalilauge werden anschließend 42,5 kg Propylenoxid zudosiert. Nach einer Nachreaktionszeit von 4 Stunden bei 110 bis 125°C wird der alkalische Polyether mit Milchsäure neutralisiert. Nach Zugabe von 90 g Ionol werden im Vakuum geringe Mengen an leichtflüchtigen Anteilen entfernt. Man erhält 90 kg eines Polyethers mit folgenden analytischen Daten:

| | |
|---|---|
| OH-Zahl (ESA) | 403 |
| OH-Zahl (PSA) | 362 |
| η | 31320 mPa.s/25°C |

### Beispiel B

Wie in Beispiel A kommen die gleichen Mengen an TDA und Propylenoxid zum Einsatz. Im Gegensatz zu Beispiel A wird der Ansatz jedoch nur mit 400 g 45 %iger wäßriger Kalilauge katalysiert. Neutralisiert wird der Ansatz mit Essigsäure. Nach Aufarbeitung erhält man 90 kg eines Polyethers mit folgenden analytischen Daten:

| | |
|---|---|
| OH-Zahl (ESA) | 389 |
| OH-Zahl (PSA) | 356 |
| η | 36690 mPa.s/25°C |

### Beispiel C (Vergleich)

In einem 100 l Reaktor werden 19,6 kg o-TDA vorgelegt und nach gründlichem Spülen mit Stickstoff bei 110 bis 125°C und 2 bis 3 bar Stickstoff innerhalb von 2,5 Stunden 32,6 kg Propylenoxid (3,5 Mol/Mol TDA) zudosiert. Nach 2 Stunden Nachreaktion und Zugabe von 400 g 45 %iger wässriger Kalilauge werden anschließend 37,8 kg. Propylenoxid zudosiert. Nach einer Nachreaktionszeit von 4 Stunden bei 110 bis 125°C wird der alkalische Polyether mit Milchsäure neutralisiert. Nach Zugabe von 90 g Ionol werden im Vakuum geringe Mengen an leichtflüchtigen Anteilen entfernt. Man erhält einen Polyether mit folgenden analytischen Daten:

| | |
|---|---|
| OH-Zahl (ESA) | 398 |
| OH-Zahl (PSA) | 380 |
| η | 48750 mPa.s/25°C |

Die angegebenen OH-Zahlen sind sowohl nach der Essigsäureanhydrid (ESA)-Methode als auch nach der Phthalsäure (PSA)-Methode bestimmt worden. Die Differenz der Werte beider Methoden gibt den Gehalt an sekundären NH-Gruppen an.

### II. Herstellung von PUR-Hartschaumstoffen

(GT = Gewichtsteile)

### Beispiel 1

### Polyol-Komponente:

Mischung aus
60 Gew.-Teilen eines erfindungsgemäßen Polyether-Polyols der OH-Zahl (ESA) 403, hergestellt durch Polyaddition von 1,2-Propylenoxid an o-Toluylendiamin gemäß Beispiel A,
30 Gew.-Teilen eines Polyether-Polyols der Hydroxylzahl (ESA) 450, hergestellt durch Polyaddition von 1,2-Propylenoxid an ein Gemisch aus Sucrose und Ethylenglykol,
10 Gew.-Teilen eines Phthalsäure-Diethylenglykolesterethers der Hydroxylzahl (ESA) 300,
2 Gew.-Teilen Wasser,
2 Gew.-Teilen eines Schaumstabilisators auf Silikonbasis (Tegostab® B 8443),
1,2 Gew.-Teilen N,N-Dimethylcyclohexylamin.

Die Polyol-Komponente löst 40 Gew.-Teile Cyclopentan bzw. >40 Gew.-Teile 1,1,1,4,4,4-Hexafluorbutan.

Die Polyol-Komponente hat eine Viskosität von 2500 mPa.s bei 25°C.

Das Rumpfpolyol weist eine rechnerische Funktionalität von 3,4 auf.

### Isocyanat-Komponente:

Polymeres MDI (Roh-MDI), NCO-Gehalt 31,5 Gew.-%.

### Herstellung eines PUR-Hartschaumstoffes:

100 Gew.-Teile der Polyol-Komponente und 13 Gew.-Teile Cyclopentan werden mittels eines Laborrührers (1000 U/min) bei 20°C gemischt. 113 Gew.-Teile dieser Mischung werden anschließend mit 130 Gew.-Teilen der Isocyanat-Komponente verrührt. Eine definierte Menge der Reaktionsmischung wird in eine Form der Abmessungen 22 x 22 x 6 cm gegossen und zu einer verdichteten Hartschaumplatte aufgeschäumt. Mehrere dieser Formkörper werden hergestellt und nach unterschiedlichen Zeiten entformt (Formverweilzeitmessung siehe Fig. 1). Nach Abkühlung des Formkörpers wird dessen irreversible Quellung bestimmt.

### Beispiel 2 (Vergleichsbeispiel)

### Polyol-Komponente:

Mischung aus
60 Gew.-Teilen eines Polyether-Polyols der OH-Zahl (ESA) 400, hergestellt durch Polyaddition an 1,2-Propylenoxid an Sucrose
30 Gew.-Teilen eines Polyether-Polyols der Hydroxylzahl (ESA) 450, hergestellt durch Polyaddition von 1,2-Propylenoxid an ein Gemisch aus Sucrose und Ethylenglykol,
10 Gew.-Teilen eines Phthalsäure-Diethylenglykolestereethers der Hydroxylzahl (ESA) 300,
2 Gew.-Teilen Wasser,
2 Gew.-Teilen eines Schaumstabilisators auf Silikonbasis (Tegostab® B 8443),
2,6 Gew.-Teilen N,N-Dimethylcyclohexylamin.

Die Polyol-Komponente löst 11 Gew.-Teile Cyclopentan, bzw. 7 Gew.-Teile 1,1,1,4,4,4-Hexafluorbutan.

Die Polyol-Komponente hat eine Viskosität von 2200 mPa.s bei 25°C.

Das Rumpfpolyol weist eine rechnerische Funktionalität von 3,8 auf.

Versuche mit i-Pentan oder n-Pentan als Treibmittel ergaben keine ausreichende Löslichkeit in der Polyol-Komponente.

### Isocyanat-Komponente:

Polymeres MDI (Roh-MDI), NCO-Gehalt 31,5 Gew.-%

### Herstellung eines PUR-Hartschaumstoffes:

100 Gew.-Teile der Polyol-Komponente und 13 Gew.-Teile Cyclopentan werden mittels eines Laborrührers (1000 U/min) bei 20°C gemischt. 113 Gew.-Teile dieser Mischung werden anschließend mit 130 Gew.-Teilen der Isocyanat-Komponente verrührt. Eine definierte Menge der Reaktionsmischung wird in eine Form der Abmessungen 22 x 22 x 6 cm gegossen und zu einer verdichteten Hartschaumplatte aufgeschäumt. Mehrere dieser Formkörper werden hergestellt und nach unterschiedlichen Zeiten entformt (Formverweilzeitmessung siehe Fig. 1). Nach Auskühlung des Formkörpers wird dessen irreversible Quellung bestimmt.

### Beispiel 3 (Vergleichsbeispiel)

### Polyol-Komponente:

Mischung aus
60 Gew.-Teilen eines Polyether-Polyols der OH-Zahl (ESA) 400, hergestellt durch Polyaddition von 1,2-Propylenoxid an Trimethylolpropan,
30 Gew.-Teilen eines Polyether-Polyols der Hydroxylzahl (ESA) 450, hergestellt durch Polyaddition von 1,2-Propylenoxid an ein Gemisch aus Sucrose und Ethylenglykol,
10 Gew.-Teilen eines Phthalsäure-Diethylenglykolesterethers der Hydroxylzahl (ESA) 300,
2 Gew.-Teilen Wasser,
2 Gew.-Teilen eines Schaumstabilisators auf Silikonbasis (Tegostab® B 8443),
2,6 Gew.-Teilen N,N-Dimethylcyclohexylamin.

Die Polyol-Komponente löst 29 Gew.-Teile Cyclopentan, bzw. 18 Gew.-Teile 1,1,1,4,4,4-Hexafluorbutan.

Die Polyol-Komponente hat eine Viskosität von 500 mPa.s bei 25°C.

Das Rumpfpolyol weist eine rechnerische Funktionalität von 2,8 auf.

Versuche mit i-Pentan und n-Pentan als Treibmittel ergaben keine ausreichende Löslichkeit in der Polyol-Komponente.

### Isocyanat-Komponente:

Polymeres MDI (Roh-MDI), NCO-Gehalt 31,5 Gew.-%.

### Herstellung eines PUR-Hartschaumstoffes:

100 Gew.-Teile der Polyol-Komponente und 13 Gew.-Teile Cyclopentan werden mittels eines Laborrührers (1000 U/min) bei 20°C gemischt. 113 Gew.-Teile dieser Mischung werden anschließend mit 130 Gew.-Teilen der Isocyanat-Komponente verrührt. Eine definierte Menge der Reaktionsmischung wird in eine Form der Abmessungen 22 x 22 x 6 cm gegossen und zu einer verdichteten Hartschaumplatte aufgeschäumt. Mehrere dieser Formkörper werden hergestellt und nach unterschiedlichen Zeiten entformt (Formverweilzeitmessung siehe Fig. 1). Nach Auskühlung des Formkörpers wird dessen irreversible Quellung bestimmt.

Die Resultate der Formverweilzeitmessung für die Beispiele 1 bis 3 (siehe Fig. 1) zeigen folgendes Ergebnis:

Während für die Formulierung Beispiel 1 auf Basis des erfindungsgemäßen o-Toluylendiamin-Propylenoxid-Polyethers nur geringe Quellwerte gefunden werden, weisen die Formulierungen der Beispiele 2 und 3 deutlich höhere Quellwerte auf.

## Patentansprüche

1. Verwendung von tertiäre Aminogruppen aufweisenden Polyetherpolyolen einer OH-Zahl von 300 bis 500, erhältlich durch Anlagerung von ausschließlich Propylenoxid an o-Toluylendiamin, zur Herstellung von harten Polyurethan-Schaumstoffen in geschlossenen Formen durch Umsetzung mit organischen Polyisocyanaten in Gegenwart von n- und/oder i-Pentan und/oder Cyclopentan und/oder Hydrofluoralkanen als Treibmittel, gegebenenfalls weiteren Verbindungen mit mindestens zwei gegenüber Isocyanaten reaktiven Wasserstoffatomen, gegebenenfalls in Gegenwart von Wasser und weiteren üblichen Hilfs- und Zusatzstoffen.

2. Verwendung gemäß Anspruch 1, dadurch gekennzeichnet, daß tertiäre Aminogruppen aufweisende Polyetherpolyole verwendet werden, die dadurch erhältlich sind, daß o-Toluylendiamin zunächst mit 3 Mol Propylenoxid und anschließend nach Zugabe eines Alkali-Katalysators mit weiteren Mengen an Propylenoxid umgesetzt wird, bis eine OH-Zahl von 300 bis 500 erreicht worden ist.

3. Verwendung gemäß einem der Ansprüche 1 bis 2, dadurch gekennzeichnet, daß eine Polyolformulierung, enthaltend 40 bis 80 Gew.-% der tertiären Aminogruppen aufweisenden Polyetherpolyole verwendet wird.

4. Verwendung gemäß einem der Ansprüche 1 bis 3, dadurch gekennzeichnet, daß zusätzlich Sucrosepolyetherpolyole einer OH-Zahl von 350 bis 500 verwendet werden.

5. Verwendung gemäß einem der Ansprüche 1 bis 4, dadurch gekennzeichnet, daß zusätzlich eine Mischung aus Sucrosepolyetherpolyolen einer OH-Zahl von 350 bis 500 und Phthalsäureesterpolyolen verwendet wird.

6. Verwendung gemäß einem der Ansprüche 1 bis 5, dadurch gekennzeichnet, daß als Hydrofluoralkan 1,1,1,4,4,4-Hexafluorbutan und/oder 1,1,1,3,3-Pentafluorpropan verwendet wird.

## Claims

1. Use of polyether polyols possessing tertiary amino groups and having an OH number of 300 to 500, obtainable by the addition of exclusively propylene oxide to o-toluylenediamine, for the manufacture of rigid polyurethane foams in closed moulds by reacting with organic polyisocyanates in the presence of n- and/or i-pentane and/or cyclopentane and/or hydrofluoroalkanes as blowing agents, optionally further compounds with at least two hydrogen atoms reactive to isocyanates, optionally in the presence of water and further conventional auxiliary substances and additives.

2. Use according to claim 1, characterised in that polyether polyols possessing tertiary amino groups are used, which are obtainable by o-toluylenediamine being reacted first of all with 3 mol of propylene oxide and then after the addition of an alkali catalyst with further amounts of propylene oxide, until an OH number of 300 to 500 has been reached.

3. Use according to one of claims 1 to 2, characterised in that a polyol formulation containing 40 to 80 wt % of the polyether polyols possessing tertiary amino groups is used.

4. Use according to one of claims 1 to 3, characterised in that sucrose polyether polyols with an OH number of 350 to 500 are additionally used.

5. Use according to one of claims 1 to 4, characterised in that a mixture of sucrose polyether polyols with an OH number of 350 to 500 and phthalic acid ester polyols is additionally used.

6. Use according to one of claims 1 to 5, characterised in that 1,1,1,4,4,4,-hexafluorobutane and/or 1,1,1,3,3,-pentafluoro-propane is used as hydrofluoroalkane.

## Revendications

1. Utilisation de polyéther-polyols présentant des groupes amino tertiaires et possédant un indice OH de 300 à 500, que l'on obtient par fixation par addition d'oxyde de propylène à titre exclusif sur de la o-toluylènediamine, pour la préparation de mousses dures de polyuréthanne dans des moules fermés par mise en réaction avec des polyisocyanates organiques en présence de n-pentane et/ou de i-pentane et/ou de cyclopentane et/ou d'hydrofluoroalcanes à titre d'agents moussants, le cas échéant d'autres composés contenant au moins deux atomes d'hydrogène aptes à réagir vis-à-vis d'isocyanates, le cas échéant en présence d'eau et d'autres adjuvants et additifs habituels.

2. Utilisation selon la revendication 1, caractérisée en ce qu'on utilise des polyéther-polyols présentant des groupes amino tertiaires que l'on obtient en faisant réagir de la o-toluylènediamine d'abord avec 3 moles d'oxyde de propylène et ensuite, après addition d'un catalyseur de métal alcalin, avec des quantités supplémentaires d'oxyde de propylène jusqu'à ce que l'on ait atteint un indice OH de 300 à 500.

3. Utilisation selon l'une quelconque des revendications 1 à 2, caractérisée en ce qu'on utilise une formulation de polyol contenant les polyéther-polyols présentant des groupes amino tertiaires à concurrence de 40 à 80% en poids.

4. Utilisation selon l'une quelconque des revendications 1 à 3, caractérisée en ce qu'on utilise en outre des polyéther-polyols de sucrose possédant un indice OH de 350 à 500.

5. Utilisation selon l'une quelconque des revendications 1 à 4, caractérisée en ce qu'on utilise en outre un mélange de polyéther-polyols de sucrose possédant un indice OH de 350 à 500 et d'ester-polyols d'acide phtalique.

6. Utilisation selon l'une quelconque des revendications 1 à 5, caractérisée en ce qu'on utilise, à titre d'hydrofluoroalcane, le 1,1,1,4,4,4-hexafluorobutane et/ou le 1,1,1,3,3-pentafluoropropane.
